# EUROPEAN PATENT APPLICATION

(11) **EP 1 521 096 A2**
(43) Date of publication of application: **06.04.2005**
(21) Application number: 04023202.7
(22) Date of filing: 29.09.2004
(51) Int. Cl.: G01S 5/02

(54) **Distributed wireless positioning engine method and assembly**

(30) Priority: 30.09.2003 US 675608
(71) Applicant: Rockwell Automation Technologies, Inc., Mayfield Heights, OH 44124 (US)
(72) Inventor: Farchmin, David W., Grafton, WI 53024 (US); Lloyd, Robert F., Muskego, WI 53150 (US)
(74) Representative: Lippert, Marianne, Dipl.-Phys.

(57) **Abstract**

An apparatus for use with a portable wireless information device (WID) and a plurality of receivers spaced apart within a facility having a space, the receivers and WID cooperating to generate position information indicative of the distances of signal paths between the receivers and the WID, the apparatus comprising at least a first processor linked to the receivers for receiving signal strength information therefrom, the at least a first processor running at least first and second position estimating programs on signal strength information associated with first and second sub-sets of the receivers, respectively, for identifying first and second position estimates of the WID within the space, respectively.

## Description

### CROSS-REFERENCE TO RELATED APPLICATIONS

Not applicable.

### STATEMENT REGARDING FEDERALLY SPONSORED RESEARCH OR DEVELOPMENT

Not applicable.

### BACKGROUND OF THE INVENTION

The field of the invention is wireless position determination and more specifically distributed positioning engines for determining the locations of wireless information devices within a space.

This section of this document is intended to introduce various aspects of art that may be related to various aspects of the present invention described and/or claimed below. This section provides background information to facilitate a better understanding of the various aspects of the present invention. It should be understood that the statements in this section of this document are to be read in this light, and not as admissions of prior art.

Wireless information systems have been developed that allows wireless computing within defined spaces. For example, 802.11 b systems have been developed wherein access points are spaced apart within a facility (e.g., an airport, an office building, a coffee house, etc.) to facilitate communication. Each access point typically includes a transceiver (i.e., a wireless transmitter and receiver) that is linked to a server. The server communicates with wireless information devices (WIDs) within the facility via the access points. These systems are well known by persons skilled in the networking arts and therefore are not described here in detail.

Several industries have developed location based computing services wherein computing applications and content made available to a WID users are at least in part a function of the instantaneous WID location. Thus, for instance, in one exemplary application, when a WID is located proximate a specific museum exhibit, a server may determine WID location and provide an application or content to the WID that is related to specific exhibit. As another instance, US patent application No. ______ which was filed on ____ and is entitled ________ teaches a system wherein, when a WID is located within a specific zone proximate an automated manufacturing assembly, a server recognizes WID location and provides information (e.g., operating characteristics, current assembly settings, selectable on screen icons for altering assembly operation, etc.) related to the assembly to the WID for presentation to the WID user.

One type of wireless position estimating system uses signal strength information generated by the access points and a WID to determine WID location. For instance, in some cases a WID may be programmed to transmit signals of known strength to access points where the signal strength drops off as the signal travels to the access points. When the access points receive the WID signals, the access points provide signal strength data along with an access point indication indicating which of the access points received the signal associated with the strength data to a server that runs a positioning engine. The server uses the signal strength data from the access points to determine WID location and then performs some type of location based service (LBS) based on the estimated location information. In other cases access points transmit known strength signals to WIDs, the WIDs repackage signal strength data received from the access points and retransmit that data back to the position determining server via one of the access points. Positioning algorithms are known in the wireless position estimating art and therefore are not described here in detail.

While existing wireless location systems facilitate many useful functions, unfortunately, existing systems have several shortcomings. First, often custom server/engine systems have to be designed that meet specific facility requirements. To this end, typical wireless position estimating systems include a single positioning engine running on a single server to determine the locations of all WIDs within a facility. In these single engine/single server systems the computational and memory requirements of the server hardware is a function of both the size/complexity (e.g., the number of access points deployed in the facility) of the facility in which the system is employed as well as the number of WIDs within the facility. Thus, five differently sized facilities where 100 WIDs are expected to be simultaneously used in each of the facilities may include five differently sized servers for determining WID location. Similarly, two similarly sized facilities where 20 WIDs will be simultaneously used in the first facility and 200 WIDs will be simultaneously used in the second facility will likely include two differently sized servers for determining WID location. As in most industries, as the number of hardware options is increased, costs associated with providing those options also increase appreciably.

Second, legacy server systems are often expensive to scale up when a facility expands. For instance, assuming an existing server for supporting 50 access points and 20 WIDs where the associated facility is expanded and will include 200 access points and where it is expected that as many as 200 WIDs will be employed simultaneously. Here, to support the increased number of access points and WIDs, the server hardware would have to be replaced or at least reconfigured to accommodate additional required hardware.

Third, where any part of a wireless position estimating system as described above fails all of the location estimates generated by the system may become suspect or the system may fail altogether. Thus, for instance, where a single access point malfunctions and fails to generate signal strength data, resulting WID location estimates may be faulty or, in some cases, may not be able to be made. As another instance, where the positioning engine server malfunctions the entire position determining system fails and applications that rely on the positioning engine estimates cannot be run.

Fourth, some positioning engines have been developed under the assumption that the general physical characteristics of facilities in which the engines are to be employed will remain essentially unchanged after a commissioning procedure is performed. For instance, world patent Number WO02054813 (hereinafter "the '813 reference") that is titled "Location Estimation In Wireless Telecommunication Networks" teaches a method of statistically analyzing signal strength data corresponding to a large number of access point-WID relationships where at least some of the relationships depend on the physical layout of the facility. In these cases, where the physical layout of the facility is altered appreciably the accuracy of the statistical analysis can be reduced. Thus, for instance, where a large machine is added to a facility or a large metal cabinet is moved into a space, analysis accuracy may suffer. In these cases, where accuracy is degraded excessively a new commissioning procedure may be required to raise the level of accuracy to an acceptable level.

### BRIEF SUMMARY OF THE INVENTION

Certain aspects commensurate in scope with the originally claimed invention are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

It has been recognized that more than one positioning engine may be run within a facility to generate multiple WID position estimates for each WID operating within the facility space. Thereafter any of several different algorithms may be used to generate a final WID position estimate as a function of the multiple estimates. For instance, the estimates for all or a sub-set of the engines may be averaged or weighted and then averaged. As another instance, some type of confidence factor may be determined for each estimate that indicates likelihood that the associated estimate is accurate and then the confidence factors may be used to select one of the multiple estimates as a final estimate. Thus, position estimating accuracy can be increased appreciably via use of multiple engines.

It has also been recognized that multiple engines can provide redundancy within a system. Thus, for instance, where one engine malfunctions, other engine estimates can be used to provide position estimates on the fly. Here, in some cases the engines may be associated with identical subspaces or regions within a facility, overlapping regions or adjacent regions.

In some cases the position determining algorithms run by the engines are identical while in other cases the algorithms may be different. In some cases each engine runs only one algorithm while in other cases at least a subset of the engines may run different algorithms as a function of general WID location. In some cases at least a subset of engines may run one algorithm and, when a related confidence factor is considered inadequate, may run another algorithm in an attempt to generate a more likely accurate position estimate.

Consistent with the above, at least some embodiments of the invention include a system for use with a portable wireless information device (WID) within a space, the WID including a transmitter for transmitting wireless WID signals, the system comprising a plurality of communication units spaced apart within the space, each unit cooperating with the WID to generate position information, the position information useable to generate a WID position estimate, the plurality of units including at least first and second sub-sets, each unit including at least one of a wireless receiver and a wireless transmitter, at least a first receiver and at least a first processor linked to the at least a first receiver for receiving position information therefrom, the at least a first processor running at least first and second position estimating programs on position information associated with the first and second sub-sets, respectively, for identifying at least first and second WID position estimates within the space, respectively.

Some embodiments include an apparatus for use with a portable wireless information device (WID) and a plurality of receivers spaced apart within a facility having a space, the receivers and WID cooperating to generate position information indicative of the distances of signal paths between the receivers and the WID, the apparatus comprising at least a first processor linked to the receivers for receiving signal strength information therefrom, the at least a first processor running at least first and second position estimating programs on signal strength information associated with first and second sub-sets of the receivers, respectively, for identifying first and second position estimates of the WID within the space, respectively.

In addition, some embodiments include a method for use with a portable wireless information device (WID) within a space, the WID including a transmitter for transmitting wireless WID signals, the method comprising the steps of obtaining position information indicative of the distances of signal paths between the WID and specific locations within the space, using a first sub-set of the position information to identify a first estimate of WID location, using a second sub-set of the position information to identify a second estimate of WID position and using the first and second estimates to identifying a final estimate of the WID location.

Moreover, some embodiments include a method for use with a portable wireless information device (WID) within a space, the WID including a transmitter for transmitting wireless WID signals, the method for tracking the position of the WID within the space and comprising the steps of obtaining position information indicative of the distances of signal paths between the WID and specific locations within the space, attempting to use a first sub-set of the position information to identify a first estimate of WID location, attempting to use a second sub-set of the position information to identify a second estimate of the WID location, when one of the first and second estimates is identified, rendering the one of the first and second estimates accessible by applications requiring WID location and when the one of the first and second estimates is not identified and the other of the first and second estimates is identified, rendering the other of the first and second estimates accessible by applications requiring WID location.

Furthermore, some embodiments include a method for use with a portable wireless information device (WID) within a space, the WID including a transmitter for transmitting wireless WID signals, the method for tracking location of the WID within the space and comprising the steps of tracking WID location with a first wireless position estimating system to generate a first position estimate, tracking WID location with a second wireless position estimating system to generate a second position estimate and using the first and second estimates to identifying a final WID position estimate.

Some embodiments also include an apparatus for use with a portable wireless information device (WID) within a space, the WID including a transmitter for transmitting wireless WID signals, the apparatus for tracking WID location within the space and comprising a plurality of receivers spaced apart within the space, each receiver receiving signals transmitted by the WID and determining signal strength of the received signals, the plurality of receivers including N sub-sets of receivers associated with N separate regions within the space and at least a first processor linked to the receivers for receiving signal strength information therefrom, the at least a first processor running first through Nth separate position estimating programs on signal strength information associated with the first through Nth sub-sets, respectively, for identifying first through Nth estimates of the WID location within the space, respectively.

In addition, some embodiments include a method for estimating the position of a wireless information device (WID) within a space, the method comprising the steps of a) estimating WID position via a first estimating program, b) identifying a confidence factor for the WID position estimate, c) when the confidence factor fails to meet a threshold requirement, repeating steps (a) through (b) with a second estimating program and when the confidence factor meets a threshold requirement, rendering the position estimate accessible to other applications.

At least some embodiments include a method for estimating the position of a wireless information device (WID) within a space, the method comprising the steps of generating a first WID position estimate via a first estimating program, generating a second WID position estimate via a second estimating program and using the first and second estimates to identify a final WID position estimate.

These and other objects, advantages and aspects of the invention will become apparent from the following description. In the description, reference is made to the accompanying drawings, which form a part hereof, and in which there is shown a preferred embodiment of the invention. Such embodiment does not necessarily represent the full scope of the invention and reference is made therefore, to the claims herein for interpreting the scope of the invention.

### BRIEF DESCRIPTION OF THE SEVERAL VIEWS OF THE DRAWINGS

The invention will hereafter be described with reference to the accompanying drawings, wherein like reference numerals denote like elements, and:

Fig. 1 is a schematic diagram of an exemplary system according to at least one aspect of the present invention;

Fig. 2a is a perspective view of an exemplary wireless information device that may be used with at least some embodiments of the present invention;

Fig. 2b is a schematic diagram illustrating various components of the wireless information device of Fig. 2a;

Fig. 3 is a schematic diagram illustrating a facility space including a plurality of access points and an overlayed representation of one arrangement of position engine regions;

Fig. 4 is a schematic diagram of part of Fig. 3 where exemplary expanded regions corresponding to access point sub-sets are also illustrated;

Fig. 5 is a flowchart according to at least one embodiment of the present invention;

Fig. 6 is a flowchart according to another embodiment of the invention;

Fig. 7 is a subprocess that may be substituted for one of the process blocks of Fig. 7 according to yet another embodiment of the invention;

Fig. 8 is similar to Fig. 7, albeit illustrating another subprocess;

Fig. 9 is similar to Fig. 7, albeit illustrating yet one other subprocess;

Fig. 10 is a subprocess that may be used to augment the process of Fig. 5;

Fig. 11 is a subprocess that may be substituted for a portion of the subprocess of Fig. 10 according to another embodiment of the invention;

Fig. 12 is a flow chart of another inventive method;

Fig 13 is a flow chart of yet another method according to the present invention where confidence factors are generated for intermediate position estimates and used to identify a final position estimate; and

Fig. 14 is a flow chart illustrating a commissioning procedure whereby positioning engines are programmed with optimal position determining algorithms.

### DETAILED DESCRIPTION OF THE INVENTION

One or more specific embodiments of the present invention will be described below. It should be appreciated that in the development of any such actual implementation, as in any engineering or design project, numerous implementation-specific decisions must be made to achieve the developers' specific goals, such as compliance with system-related and business related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

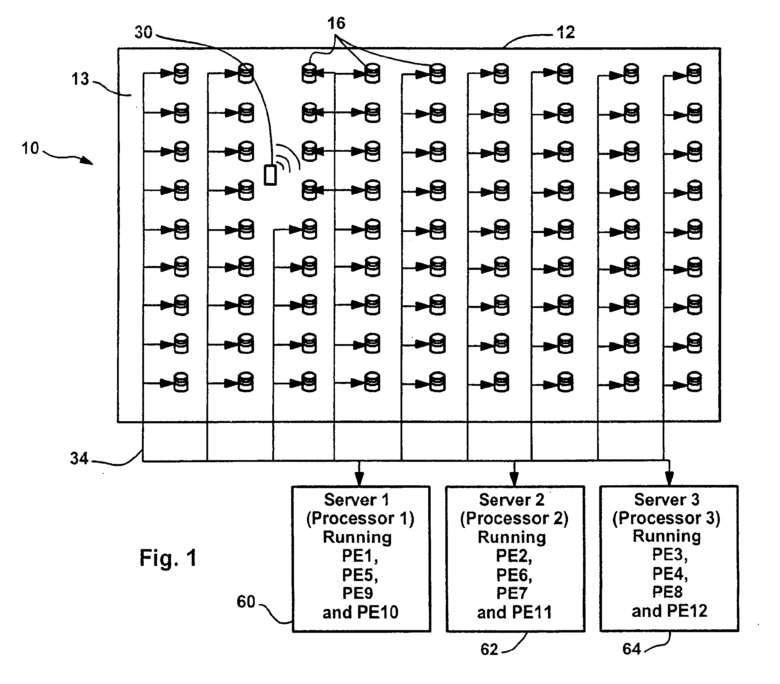

Referring now to the drawings wherein like reference numerals correspond to similar elements throughout the several views and, more specifically, referring to Fig. 1, the present invention will be described in the context of an exemplary, albeit simplified, manufacturing facility 10 that includes a rectilinear floor space or area 13 confined by four facility walls collectively identified by numeral 12. Although not illustrated in Fig. 1, in a typical manufacturing facility 10, many different machines and automated assemblies would be spaced out within space 13 and would be arranged to perform various manufacturing functions. For the purposes of the present explanation, it should be assumed that assemblies and machines located within space 13 would include both sensors for sensing assembly and machine activity and actuators for controlling assembly and machine activity.

In addition to the components described above, exemplary facility 10 also includes a plurality of communication units or access points 16 (only three labeled in Fig. 1), first, second, and third servers 60, 62 and 64, respectively and a data and communication network 34 (e.g., an Ethernet, LAN, etc.). Moreover, a plurality of wireless information devices such as palm type computing devices, lap top computers, wireless transmitting identification badges, etc., are also included as part of system 10. Herein the present invention will described in the context of a single exemplary WID 30 having various features and capacities. However, it should be understood that other WID types are contemplated, the primary requirement being that each WID is capable of transmitting electromagnetic signals wirelessly within a facility space 13. In some cases, as in the exemplary case below, WIDs may also include wireless receivers.

Referring still to Fig. 1, each communication access point 16 includes a two-way wireless transceiver that, as well known in the computer arts, is capable of transmitting and receiving electromagnetic (e.g., radio or infrared) signals within an area proximate the transceiver. Wireless transceivers like access point 16 are well known in the industry and, therefore, in the interest of simplifying this explanation, will not be described here in detail. For the purposes of the present invention, it should suffice to say that each transceiver 16 transmits information signals which decrease in strength as distance from the transceiver increases. In the illustrated example, 81 separate access points 16 are provided within area 13 and are generally equispaced within area 13. Typically, access points 16 will be mounted on the ceiling within an area 13 to allow relatively unobstructed communication between each access point 16 and other devices that communicate via wireless communication therewith. In some embodiments all or at least a subset of the access points may be integrated into other automated assembly components such as human-machine interfaces that are already linked to network 34 for other purposes. While access points 16 are illustrated as being substantially equispaced within area 13, it should be appreciated that other access point arrangements are contemplated and that, in many cases, other access point arrangements may be most suitable given specific assembly layouts and the physical characteristics of the assemblies within space 13. In addition, it should be appreciated that, in at least some embodiments of the present invention, all or at least a sub-set of access points 16 may be replaced by simple wireless receiver units that, as the label implies, only receive wireless signals and cannot wirelessly transmit signals.

Referring still to Fig. 1, servers 60, 62 and 64 may be positioned within facility 10 or may be located at some remote location such as, for instance, a separate building, in a separate room within the facility that includes area 13 or at a completely different location such as a remote campus associated with facility 10. In addition, servers 60, 62 and 64 may be distributed within space 13 or in one or more affiliated locations.

Each of exemplary servers 60, 62 and 64 perform similar functions and, therefore, in the interest of simplifying this explanation, unless indicated otherwise, only server 60 will be described here in any detail. Here, it should suffice to say that each of servers 60, 62 and 64 is linked via network 34 to each of access points 16 for two-way communication therewith. Thus, any of servers 60, 62 or 64 may obtain data from any of access points 16 and may provide information to any of access points 16 for transmission within area 13. Information transmitted from one of the access points 16 to one of the servers 60, 62 or 64 is typically tagged by the access points so that the receiving server can determine which access point 16 provided the received information. This tagging may either be performed by the access points 16 earmarking data packets with an access point identifier (e.g., an access point number) or, in the alternative, may be facilitated by simply providing separate hardwires from each of the access points 16 to each of the servers 60, 62 or 64. In a similar fashion, in at least some embodiments, each of servers 60, 62 and 64 is configured such that the server can address information to each separate and specific access points 16.

Referring still to Fig. 1, server 60 is, in at least some embodiments, a processor based workstation that performs various software programs. While server 60 may perform control, monitoring, safety, etc., programs related to the machines and automated assemblies operating within space 13, for the purposes of the present invention, server 60 runs at least one positioning engine software program and, in some embodiments, runs several positioning engine software programs to estimate the position or positions of one or more WIDs 30 located within space 13.

While various positioning engine (PE) programs are contemplated, in order to simplify this explanation, unless indicated otherwise, the present invention will be described in the context of a system 10 wherein each PE performs a statistical analysis on received signal strength data from an associated sub-set of access points to generate at least an initial WID position estimate. Once a WID position has been estimated, server 60 may publish that estimate on network 34 so that other servers or processors that require WID location estimates to perform various facility applications have access to the location information. In at least some embodiments, server 60 itself may be programmed to facilitate various applications as a function of WID location. For example, in at least some cases, server 60 may control automated assembly processes as a function of WID 30 location. As another example, server 60 may provide data associated with one or more automated assemblies within space 13 to a WID 30 when the WID 30 is proximate the automated assembly or assemblies. Other control, monitoring and safety functions are contemplated.

Hereinafter, while more than one positioning engine program may be performed by each of servers 60, 62 and 64, each engine program will be referred to as though it is its own separate entity unless indicated otherwise. Thus, for instance, where server 60 runs four separate positioning engine programs, each program will be referred to as a distinct positioning engine.

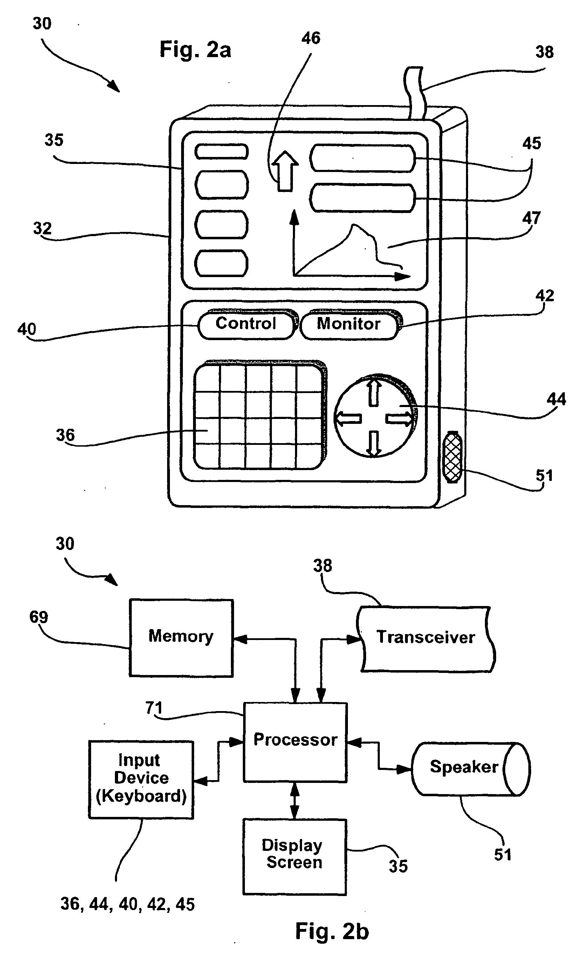

Referring now to Figs. 2a and 2b, an exemplary WID 30 is illustrated which may be usable to obtain data related to automated assemblies within space 13 (see again Fig. 1) and, in at least some cases, to control automated assemblies. Exemplary WID 30 includes, generally, a plurality of components that are mounted within a hardened plastic or metallic housing identified by numeral 32. WID 30 components include a processor 71, an input device (e.g., keyboard 36), a display screen 35, a speaker 51 for audio output, a transceiver 38 and a memory 69. Processor 71 is linked to each of the input device, display screen 35, speaker 51, transceiver 38 and memory 69 for communication therewith. Processor 71 is equipped to run various programs for both displaying information via screen 35 and for receiving control signals and communicating those control signals to access points 16 via transceiver 38 in a manner consistent with the comments above.

The input device may include any of several different types of components including a push button keyboard 36, separate selection buttons 40 and 42, a rocker type selection button 44, and/or selectable icons that may be provided via display screen 35 such as, for instance, icons 45. It is contemplated that, in at least some embodiments, a pointing cursor 46 may be moveable about screen 35 and placed over one of the selectable icons after which a conventional type mouse clicking action may be used to select one of the icons and cause some display or control function to occur. In other embodiments display 35 may comprise a touch screen where icons are selectable via a stylus or the tip of an operator's finger.

Display screen 35 may be any type of conventional display screen suitable for hand-held devices and, for example, may be equipped to display numeric information, icons, graphs such as graph 47 or any other type of monitoring and control information that may be associated with facility assemblies. Speaker 51 is a conventional small audio output speaker. Transceiver 38 is mounted approximately at the top end of housing 32. As in the case of the transceivers that comprise access points 16, transceiver 38 is capable of transmitting electromagnetic signals and also receiving such signals so that information can be provided to servers 60, 62 and 64 or received therefrom via access points 16. Memory 69 stores programs performed by processor 71 and, in at least some embodiments of the invention, stores a WID identifier (e.g., a WID identification number, user ID number, etc.).

Generally, according to at least one aspect of the present invention, a plurality of different positioning engine software programs (PEs) are stored for access by servers 60, 62 and 64 wherein each of the positioning engines is associated with a different region of and sub-set of access points 16 within space 13. After positioning engines are associated with specific sub-sets of access points 16 corresponding to different regions within space 13, in at least some embodiments, a commissioning procedure is performed whereby positions within space 13 are correlated with specific sets of WID signal strength data and that correlated information is stored for each of the positioning engines. After commissioning has been completed, during normal operation of system 10, when a WID 30 is turned on in space 13 and transmits wireless signals of known signal intensity, access points 16 receive the WID signals, determine signal strength and transmit the strength data along with an indication of which access point generated the signal strength data onto network 34. Next, each server 60, 62 and 64 receive data from the access points that are associated with the positioning engines run by specific the server and use that data to determine WID location.

In at least some embodiments of the invention, once at least a sub-set of the positioning engines have generated initial WID position estimates, one or a sub-set of servers 60, 62 and 64 identify one of the positioning engines that will "own" the task of generating a final WID position estimate. The "owning" engine thereafter performs an additional position estimating process which generates a final WID position estimate. Various additional position estimating processes are contemplated and several examples are discussed below. Where a PE assumes ownership of the final position estimating task, that PE will be referred to hereinafter as an owing PE with respect to the specific WID being tracked. Where an owing PE requires data from one or more other PEs to generate the final WID position estimate, the other PEs from which data is required will be referred to hereinafter as supporting PEs.

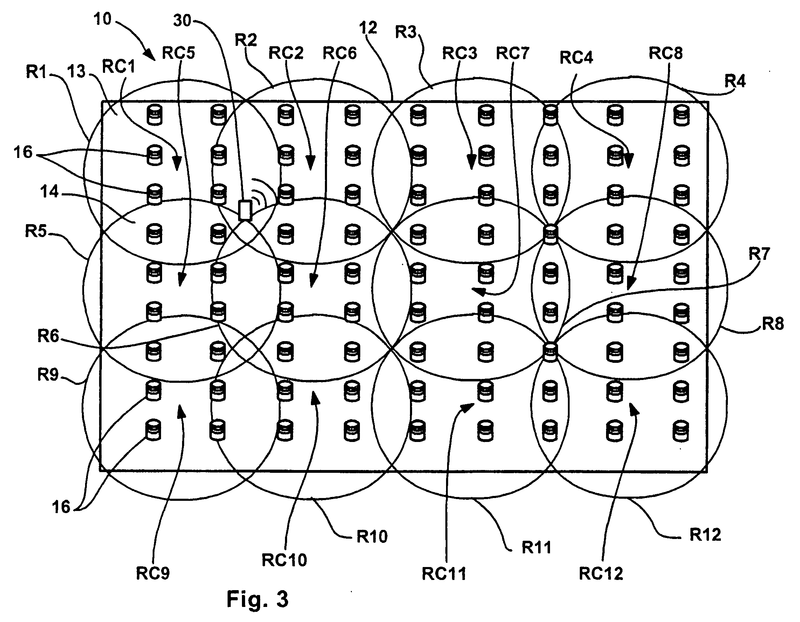

Referring once again to Fig. 1, regardless of the position of a WID 30 within space 13, it is desirable for the WID 30 to be located within one of the regions associated with at least one of the positioning engines so that optimal ownership of the final position estimating task can be facilitated. The idea here is that when a WID resides within a region associated with a specific engine, the specific engine may be the optimal engine for determining WID location and therefore should at least be a candidate for ownership. To this end, referring also to Fig. 3, twelve exemplary circular engine regions R1 through R12 that are associated with space 13 are illustrated wherein almost every location within space 13 is in at least one of engine regions R1 through R12. Herein, unless indicated otherwise, it will be assumed that twelve separate positioning engines PE1 through PE12 are run by servers 60, 62 and 64 in Fig. 1 and that engines PE1 through PE12 correspond to regions R1 through R12, respectively. Thus, in some embodiments, when a WID is located within region R1, associated engine PE1 will at least be a candidate for ownership, when a WID is located in region R12, associated engine PE12 will at least be a candidate for ownership, and so on.

Referring still to Fig. 3, note that in some cases a WID 30 will be located within more than one region R1 through R12. For instance, WID 30 as illustrated is within each of regions R1 and R2 and is also on the borders of each of regions R5 and R6. Here ownership of the final estimating task cannot be determined solely by determining which region WID 30 resided in. One way to resolve ownership where a WID is within more than one region is to create a rule set to resolve the matter. One exemplary rule is to compare distances between initial position estimates and central points of each region that generates an initial position estimate and to assign ownership to the engine associated with the region in which the shortest distance occurs. Here, in many cases the position estimating algorithms that are employed will place greater weight on initial estimates generated by owning engines than on other engines and therefore tying ownership to relative position with respect to a central point is typically optimal. Referring still to Fig. 3, in at least some embodiments of the present invention, it is advantageous to identify region center points RC1 through RC12 that correspond to the center point locations of regions R1 through R12. Use of points RC1-RC12 is described in greater detail below.

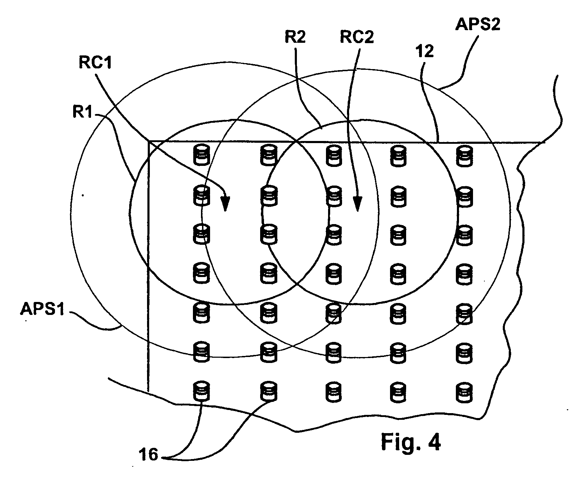

Once regions within space 13 have been identified for each of the positioning engines, suitable sub-sets of access points 16 have to be identified for each of the regions for generating the data required by the positioning engines to generate the initial position estimates. One way to identify suitable access point sub-sets is to identify all of the access points either within a region or proximate the region as a sub-set to be associated with a corresponding engine. To this end, referring also to Fig. 4, the upper left-hand corner of Fig. 3 is illustrated again in Fig. 4 including a plurality of access points 16 and engine regions R1 and R2. In addition, extended regions for identifying access point sub-sets associated with each one of engine regions R1 and R2 are also illustrated. For example, the region labeled APS1 corresponds to engine region R1 while extended region APS2 corresponds to second engine region R2. Each of the extended regions APS1 and APS2, as their labels imply, include a larger area than their corresponding engine regions R1 and R2 and, generally, are concentric with their associated engine regions R1 and R2, respectively. In the present example, access points within each one of the extended regions may be selected to comprise a sub-set of the facility access points 16 that are used by the positioning engine associated with a corresponding engine region. Thus, for instance, the seventeen access points within extended region APS1 or at least partially within region APS1 may be selected as the sub-set of points used by first positioning engine PE1 associated with first region R1 to generate at least initial WID location estimates. Similarly, the 22 access points 16 that reside within extended region APS2 may be selected as the sub-set of points used by second position engine PE2 associated with region R2 to generate initial WID position estimates. Referring still to Fig. 3, while extended regions like regions APS1 and APS2 in Fig. 4 are not illustrated for third through twelfth regions R3 through R12, it is contemplated that extended regions or something akin thereto would be used to identify access point sub-sets associated with each of regions RC3 and R12.

Referring still to Figs. 3 and 4, the exemplary regions illustrated are only used during a commissioning process as aids to ensure that all positions with space 13 are within at least some positioning engine region, to identify center points of regions associated with positioning engines and to identify access point sub-sets to be associated with each positioning engine. After commissioning, each positioning engine will have been programmed to use data from an associated sub-set of access points to determine WID location and, in the present example, with a central point of an associated region (e.g., R1).

Referring once again to Figs. 1 and 3, in the present example each server 60, 62 and 64 runs four separate positioning engines corresponding to four of the regions R1 through R12 indicated in Fig. 3. To this end, server 60 runs positioning engines PE1, PE5, PE9 and PE10 corresponding to engine regions R1, R5, R9 and R10. Similarly, server 62 runs positioning engines PE2, PE6, PE7 and PE11 corresponding to regions R2, R6, R7 and R11 while server 64 runs engines PE3, PE4, PE8 and PE12 corresponding to engine regions R3, R4, R8 and R12, respectively. Here, adjacent engines often require data from at least some of the same access points 16 and therefore, by grouping the engine regions together in which positioning engines run by each server estimate position the data interchange on network can be minimized.

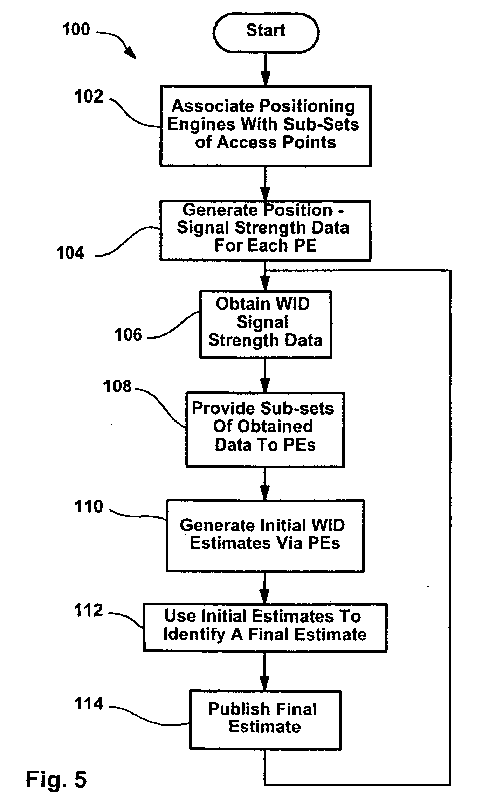

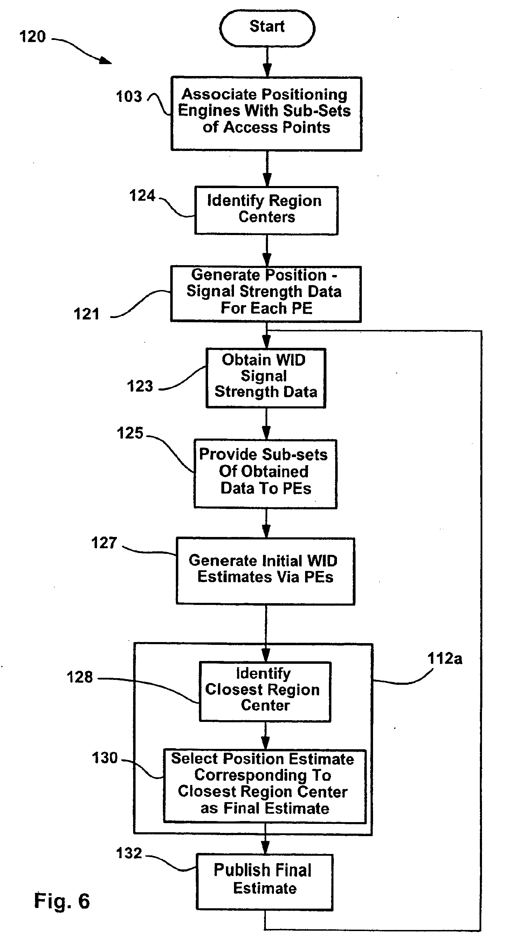

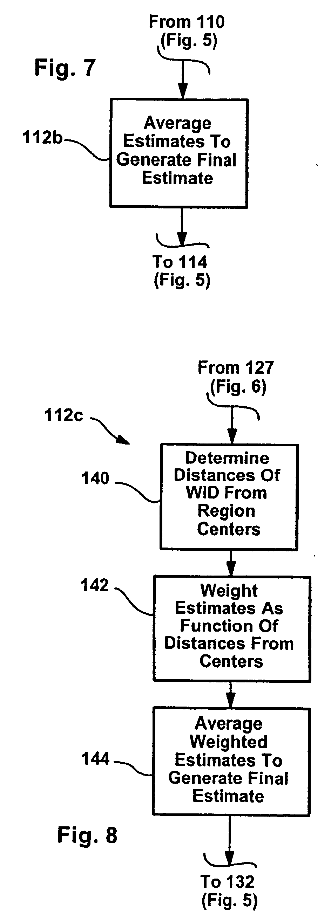

Referring now to Fig. 5, one general method 100 for estimating WID 30 position within a facility space is illustrated. In Fig. 5 blocks 102 and 104 generally correspond to a commissioning process while blocks 106 through 114 correspond to subprocesses that occur after commissioning has been completed and during normal system operation to estimate WID position. Referring also to Figs. 1 and 3, at block 102 a process is used to associate positioning engines PE1 through PE12 with sub-sets of access points 16 to be used by the positioning engines PE1 through PE12 to generate the initial position estimates. At block 104, position-signal strength data tables for each of positioning engines PE1 through PE12 are generated. Processes of this type for single engines are known in the art and therefore are not described here in detail. Here, it should suffice to say that one of the known processes for a single engine is simply performed for each separate engine PE1-PE12.

Referring still to Figs. 1, 3 and 5, after the commissioning procedure has been completed, control passes to block 106 where, during normal operation, when WID 30 is turned on within space 13 and transmits wireless signals to access points 16, each access point 16 obtains the WID signal and determines signal strength. At block 108, each access point 16 transmits a data packet including the signal strength data and an indication of which access point is transmitting the data onto network 34. In addition, at block 108, each servers 60, 62 and 64 monitor network 34 for data packets from access points associated with the position engines run by the specific server. For example, server 60 monitors network 34 for access point data packets from access points in any of the access point sub-sets associated with positioning engines PE1, PE5, PE9 and PE10. Servers 60, 62 and 64 provide the access point data to the positioning engines that require the data.

Continuing, at block 110, initial WID position estimates are generated by each positioning engine PE1 through PE12. At block 112, one or a sub-set of the positioning engines use the initial estimates to identify a final estimate and at block 114 the final estimate is published or broadcast on network 34 so that other servers or processors requiring the WID position estimate can obtain that estimate therefrom. After block 114 control passes back up to block 106 where the process is repeated to update the final estimate and actively track WID movement within space 13.

Referring now to Fig. 6, another inventive method 120 that is similar to method 100 of Fig. 5 is illustrated. Method 120 differs from method 100 in that method 120 includes a step of identifying engine region center points (e.g., RC1, RC2, etc., in Fig. 3) and includes a more specific subprocess 112a for identifying a final WID position estimate. To this end, at block 103, each of positioning engines R1 through R12 is associated with a sub-set of access points 16 as in block 102 of method 100. After block 103, control passes to block 124 where the region center points RC1 through RC12 associated with each of positioning engines PE1 through PE12, respectively, are identified. After block 124, control cycles through blocks 121 through 127 which are identical to blocks 104 through 110 in Fig 5 above where WID signal strength data is obtained and used by each positioning engine PE1 through PE12 to generate initial WID position estimates.

As illustrated, block 112a, which is akin to block 112 in method 100, includes two process blocks 128 and 130. At block 128, at least one of the positioning engines PE1 through PE12 identifies which of the initial WID position estimates is closest to an associated region center point. Thus, for example, in at least some embodiments of the present invention, each one of the positioning engines PE1 through PE12 may independently compare its initial WID position estimate to the region center point RC1 through RC12 associated therewith. For instance, engine PE1 compares its initial position estimate to region center point RC1, engine PE2 compares its initial position estimate to region center point RC2, and so on. According to at least one method, each engine PE1 through PE12 generates a distance value indicating the distance between its initial estimate and the region center point associated therewith and broadcasts its distance value on network 44. Here, the difference values are akin to one type of confidence factor. In addition, each engine PE1 - PE12 also monitors network 34 for distance values broadcast by each of the other eleven positioning engines. At block 130, once a positioning engine receives data from the other positioning engines via network 34, the receiving engine determines whether or not its distance value is less than the other distance values. Where an engine's distance value is less than the other distance values at block 130, the positioning engine asserts ownership of the final estimating task and selects its initial position estimate as the final estimate. At block 132, the engine that generated the smallest distance value publishes its WID position estimate on network 34. After publishing the final estimate control passes back up to block 123 where the loop above is again repeated.

Although not illustrated, in a method similar to the method described above, one of the engines PE1-PE12 may be programmed to determine ownership by comparing the distance values and to then assign ownership to the engine that generates the shortest distance value. In another method where only one of the engines compares the distance value, in addition to broadcasting their distance values, each engine may also broadcast its initial position estimate to the comparing engine. Thereafter, when the comparing estimate identifies the shortest distance value, the comparing engine may be programmed to publish the position estimate associated with the shortest distance value.

Referring now to Fig. 7, a subprocess 112b that may replace subprocess 112 in method 100 of Fig. 5 is illustrated. Referring also to Fig. 5, after initial WID position estimates have been generated by each of the positioning engines PE1 through PE12 at block 110, control passes to block 112b in Fig. 7. At block 112b the positioning engines average the initial estimates to generate a final WID position estimate after which control again passes block 114 in Fig. 5 where the final estimate is published. Here, in at least some embodiments, one of the positioning engines is programmed to perform the averaging process of block 112b. For instance, referring also to Fig. 1, first positioning engine PE1 may be programmed to perform the averaging process. In this case, after each of the engines run by servers 62 and 64 has generated their initial WID position estimates, those engines transmit their initial estimates to engine PE1. In addition, engine PE1 obtains the initial estimates from engines PE5, PE9 and PE10 and performs the averaging process based on all of the obtained initial estimates.

Referring now to Fig. 8, a subprocess 112c that may be substituted for subprocess 112a in Fig. 6 is illustrated. Referring also to Fig. 6, after initial WID position estimates have been generated by positioning engines PE1 through PE12, control passes to block 140 where each of engines PE1 through PE12 identifies the distance between its initial WID position estimate and the region center point associated with the specific positioning engine as a distance value. At block 142, each of the engines weights its initial estimate as a function of the distance value identified in block 140. Thus, for instance, where distance identified by first positioning engine PE1 is less than the distance identified by second positioning engine PE2, first positioning engine PE1 weights its initial estimate more heavily than does second positioning engine PE2. After block 142, at block 144, one of the engines averages the weighted estimates to generate the final estimate. After block 144, control again passes to block 132 in Fig. 6 where the final estimate is published. Here, as in the case of Fig. 7, in at least some embodiments, one of the positioning engines is programmed to perform the averaging function after obtaining the weighted initial estimates from the other positioning engines.

In other embodiments the averaging task may be negotiated between the engines so that ownership of that task is dependent on other factors such as the shortest distance estimate. In some embodiments the weighting steps may be performed by an owning positioning engine. For example, where first engine PE1 owns the task of generating the final position estimate (e.g., the first engine distance value is less than the other distance values), the first engine may apply distance value based weights to associated position estimates prior to performing the averaging subprocess. Other orders of steps are contemplated.

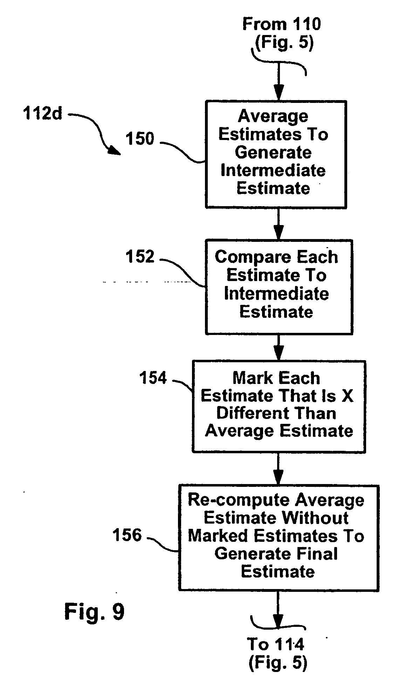

Referring now to Fig. 9, yet one additional subprocess 112d that may be used to replace subprocess 112 in Fig. 5 is illustrated. Referring also to Figs. 1 and 5, after the positioning engines PE1 through PE12 generate their initial position estimates at block 110, control passes to block 150 in Fig. 9 where the initial estimates are averaged to generate an intermediate WID position estimate. Next, at block 152, the positioning engine that generates the intermediate estimate compares each initial estimate to the intermediate estimate. At block 154, where an initial estimate is substantially different than the intermediate estimate, the initial estimate is marked. For example, in some cases, where an initial estimate is more than four feet away from the intermediate estimate (e.g., the average estimate), that initial estimate may be marked. As another example, where the distance between an initial estimate and the intermediate estimate is greater than an average distance between the initial estimates and the intermediate estimate, the initial estimate may be marked. For instance, where the distance between the first initial estimate (i.e., the estimate generated by engine PE1) and the intermediate estimate is eight feet and the average distance between all twelve of the initial estimates and the intermediate estimate is four feet, the first initial estimate would be marked.

Continuing, at block 156, the engine that performed the averaging process at block 150 recomputes the average estimate without using the marked estimates to generate a final estimate. After block 156, control again passes to block 114 in Fig. 5 where the final estimate is published. Here, in at least some cases it is believed that the recomputed final estimate would be more accurate than the first average estimate.

Although not illustrated, other embodiments are contemplated wherein averaging, weighting, selections of initial estimate sub-sets and other techniques may be combined in many other ways to increase accuracy of position estimates.

In at least some cases, it has been recognized that once a positioning engine owns the task of identifying the position of a specific WID, that ownership should remain constant until the position estimate indicates that the WID has been moved to a location outside an area associated with that specific positioning engine so that the ownership decision need not be made every time new initial estimates are generated by the engines. Thus, for instance, referring again to Figs. 1 and 3, after positioning engine PE1 obtains ownership of the final estimating task for a specific WID as described above, in at least some embodiments of the invention, while WID 30 remains located within first positioning engine region R1 associated with first engine PE1, engine PE1 will retain ownership. Once the position estimate indicates that the WID 30 is outside region R1, in at least some embodiments, another ownership determination will be made.

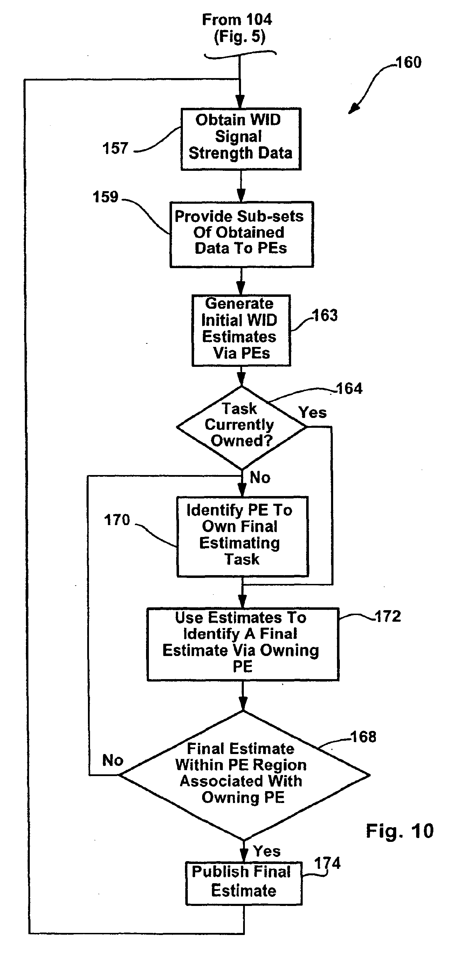

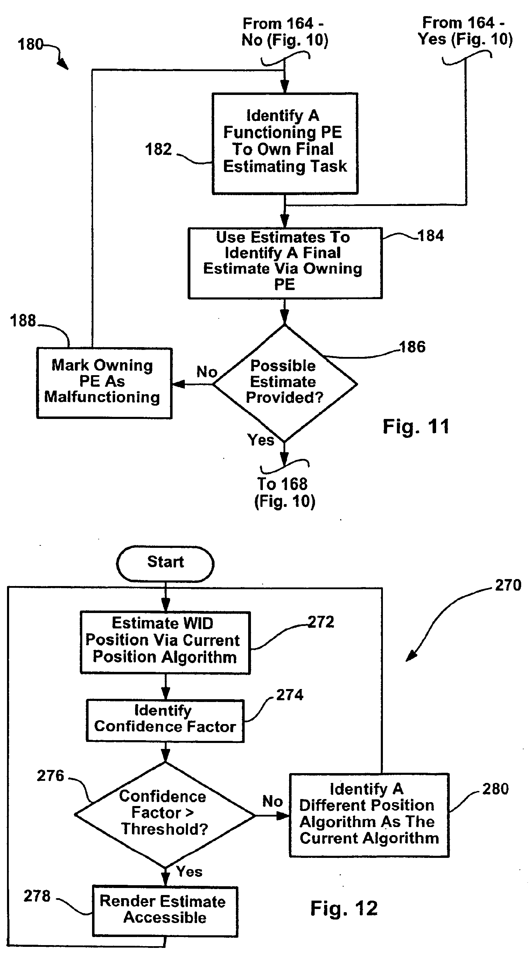

Consistent with the discussion above, referring now to Fig. 10, a subprocess 160 that may be used to replace subprocess blocks 106 through 114 in Fig. 5 is illustrated. Referring also to Figs. 1 and 5, after the commissioning procedure is completed at block 104, control passes to block 157 in Fig. 10. Blocks 157, 159 and 163 in Fig. 10 are identical to blocks 106, 108 and 110 in Fig. 5, respectively. After block 163 where the positioning engines each generate initial position estimates, control passes to block 164. At block 164, during the first pass through subprocess 160 where the final estimating task has not yet been assigned to one of the positioning engines, control passes to block 170. At block 170, position engines PE1-PE12 determine which position engine shall own the final position estimating task for the specific WID. As above, in at least some embodiments this ownership determination may be via a comparison of distance values between initial position estimates and region center points (e.g., see RC1, RC2, etc., in Fig. 3). Other ownership algorithms are contemplated.

After block 170, at block 172, the owning positioning engine uses the initial estimates to identify a final WID position estimate. At block 168 the owning engine determines if the final estimate is within the engine region associated with the owning engine. Where the final estimate is not within the associated engine region control passes back up to block 170 where ownership of the final estimating task is re-determined and control loops back through blocks 172 and 168. At block 168, where the final estimate is within the associated engine region, control passes to block 174. At block 174, the final estimate is published by transmission on network 34. After block 174, control passes back up to block 157 where signal strength data is again obtained and the process is repeated.

Thus, it should be appreciated that, according to subprocess 160, the number of task ownership determinations can be minimized by re-determining ownership only when a WID is moved out of a region that is clearly associated with a specific positioning engine.

In addition to the concepts above, at least some inventive ownership embodiments include redundancy functions wherein, if one or more of the positioning engines malfunction, the other engines may nevertheless still generate a useable final position estimate. To this end, referring to Fig. 11, a subprocess 180 that may be substituted for subprocess blocks 170 and 172 in Fig. 10 is illustrated. Referring also to Fig. 10, where a task is not currently owned at block 164, control passes to block 182 in Fig. 11. At block 182, the positioning engines that are currently functioning properly arbitrate to assign ownership of the final estimating task. Here, any engine previously marked as malfunctioning will not be includes in the arbitration process. After ownership is established, at block 184 the owning engine generates a final position estimate. At decision block 186 the owning engine determine if the final estimate is a possible estimate. Here, for instance, where the estimated position is outside a facility space or is meaningless (e.g., no estimate is generated) the estimate is not possible. As another instance the owning engine may track most recent estimates and where some inconsistency is identified, the owning engine may identify the inconsistency as not possible. For example, if recent WID position estimates place a WID 300 feet away from the current estimate, the current final estimate may be deemed not possible. As yet one other instance, where an owning engine's initial estimate is way off from a final estimate, the final estimate may be deemed not possible.

Where the final estimate is possible, control passes back to block 168 in Fig. 10 where the process continues. At block 186, where the final estimate is deemed not possible, at block 188 the owing engine is marked as a malfunctioning engine and control passes to block 182 where a different currently functioning engine is assigned ownership. The new owning engine runs another algorithm to generate a final estimate.

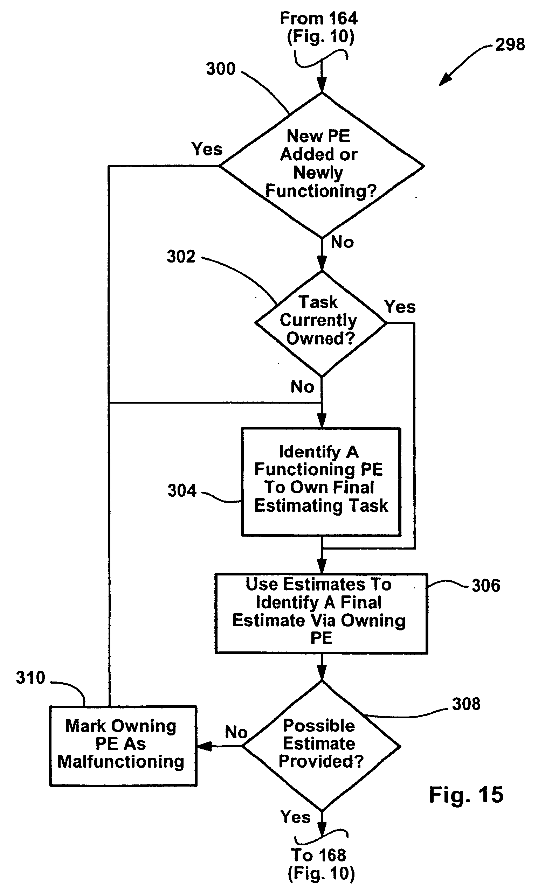

In some cases, when a previously malfunctioning PE becomes functional again, the arbitration process may be reinitiated to optimize PE ownership based upon current PE environment. Similarly, when a new PE is added to the system the arbitration process may be reinitiated to optimize ownership. To this end, referring to Fig. 15, another sub-process 298 that may be substituted for the sub-process corresponding to blocks 164, 170 and 172 in Fig. 10 is illustrated. Referring also to Fig. 10, after the initial WID position estimates have been generated at block 163 in Fig. 10 control passes to block 300 in Fig. 15. At block 300, one of the position engines determines if a new PE has been added to the system and commissioned or if one of the previously malfunctioning PEs has again become functional (i.e., capable of generating possible WID position estimates. This task may be aided by a facility employee that actually indicates a new PE or a PE that is again functioning in some embodiments. In other embodiments, when a PE malfunctions, the PE may be programmed to still perform its positioning engine functions and it or another PE may be programmed to monitor the engine to determine if the engine is still malfunctioning. Where the engine is no longer malfunctioning (i.e., the resulting position estimate is a possible estimate), the engine may automatically be re-added to the function engines at block 300.

At block 300, where no new positioning engine has been added to the system and no engine has been relabeled as functioning, control passes to block 302 where the engines determine if one of the engines owns the final estimating task. Where one of the engines owns the final estimating task control passes to block 306. Blocks 306, 308 and 310 are akin to blocks 184, 186 and 188 in Fig. 11 and therefore will not be described again here in detail. At block 302, where the final estimating task is not currently owned control passes to block 304 which is akin to block 182 in Fig. 11 and therefore is not described here again in detail.

Referring again to block 300, where a new PE has been added to the system or a previously malfunctioning PE becomes functional, control passes to block 304 and passes by decision block 302 so that the final estimating task arbitration is re-performed taking into account the newly added or functional PE. This dynamic reconfiguration or "re-ownership", both dropping and adding PEs, is important to some embodiments of the present invention.

According to another aspect of the invention, after the general location of a WID 30 within a space 13 is estimated, the engines may be programmed to use initial estimates from only a sub-set of the engines proximate the general location of the WID 30 to generate the final estimate. For example, referring again to Fig. 3, when a WID 30 is initially sensed within space 13, engines PE1, PE4, PE9 and PE12 corresponding to a corner regions R1, R4, R9 and R12 may cooperate to determine a general location of WID 30 within space 13. Where the WID 30 is located as illustrated (i.e., in the upper left-hand quadrant of space 13), the engines associated with the upper left-hand quadrant of space 13 may be selected to form a sub-set for position estimating purposes. Thus, for instance, engines PE1, PE2, PE5 and PE6 may cooperate to estimate WID 30 location and the other engines would not take part in the estimation. Thereafter, the engine sub-set would operate in any of the manners describes above to estimate position until the general location of WID 30 is modified.

In at least some inventive embodiments it is contemplated that each engine PE1 through PE12 will run an identical estimating program, the only difference being the subsets of access points associated with each engine.

In particular, in some cases, the final estimating processes performed by each engine will be identical. Thus, for instance, where engine PE1 associated with region R1 weights its initial estimate by a factor of two and all other initial estimates by a factor of one when it establishes final estimate ownership, each of engines PE2 through PE12 would similarly weight their initial estimates by a factor of two and all other initial estimates by a factor of one when they establish ownership. Where the engine algorithms are identical, system 10 is particularly easy to scale by simply adding additional instances of positioning engines associated with new regions (e.g., R1, R2, etc.) within a facility space 13.

In other inventive embodiments the initial and/or final estimating programs run by each of the engines may be different or, at least subsets of the programs may be different. Thus, for instance, referring again to Fig. 3, the first engine PE1 associated with region R1 may run a first estimating program to generate an initial estimate while second engine PE2 associated with region R2 runs a second program to generate an initial estimate that is different than the first program. More specifically, as one example, the first program may be based on a statistical analysis while the second program is a triangulation type program as well known in the wireless positioning arts. As another instance, first engine PE1 may run a weighting and averaging program to generate a final position estimate while second engine PE2 runs a simple averaging program.

In some embodiments a single positioning engine may run several different position estimating algorithms depending upon location within an associated region. For instance, referring again to Fig. 3, engine PE1 associated with region R1 may apply weights differently to initial estimates from the engines as a function of the distance value from central point RC1 of the initial estimate generated by engine PE1 when engine PE1 owns the final estimating task. Thus, for example, when the initial estimate-central point distance value identified by engine PE1 is less than 30 feet, the initial estimate generated by engine PE1 may be weighted a factor of two while other estimates are weighted by a factor of one and, when the initial estimate-central point distance value identified by engine PE1 is greater than 30 feet, the initial estimate generated by engine PE1 may be weighted by a factor of one while other estimates are also weighted by a factor of one.

As another instance, when the initial estimate central point distance value identified by engine PE1 is less than 30 feet, engine PE1 may provide its initial estimate as the final estimate and, when the initial estimate-central point distance value identified by engine PE1 is greater than 30 feet, engine PE1 may average initial estimates from the four engines associated with proximate regions. Other algorithm determining processes and contingencies are contemplated.

In some cases it is contemplated that more than one method may be used to generate intermediate estimates of WID position and also to generate a separate confidence factor for each of the intermediate estimates. Thereafter the confidence factors may be used to select one or the other of the intermediate estimates as the final estimate for publication. Thus, for example, referring again to Figs. 1 and 3, when a WID 30 is located as shown in Fig. 3, each of engines PE1 and PE2 may generate intermediate estimates of WID position along with associated confidence factors. The intermediate estimates may be akin to the initial estimates described above or may be more complex averages, weighted averages, etc., of the initial estimates described above or, in some cases, may be generated via triangulation. The confidence factors may be based on any suitable system data including eradicity of position data (e.g., degree to which data is jumping around), signal to noise ratio of data, a comparison of position to known recent position, a comparison of position estimate to other intermediate position estimates, position with respect to a central point of an associated region, position with respect to the access points from which data was obtained to generate the intermediate estimate (e.g., is position within triangular space defined by three access points that generated data to perform triangulation position estimate), etc., or a subset of the above. Other considerations in determining confidence factor values are contemplated. For example, in at least some cases stationary access points at known locations may be used to transmit known intensity signals to other access points, position estimates of the transmitting points may be generated and compared to the known positions. Differences between the estimates and known positions can be used to generate confidence factors. After intermediate estimates and confidence factors are generated, a processor may be programmed to select the intermediate estimate having the greatest confidence factor as the final estimate for publication.

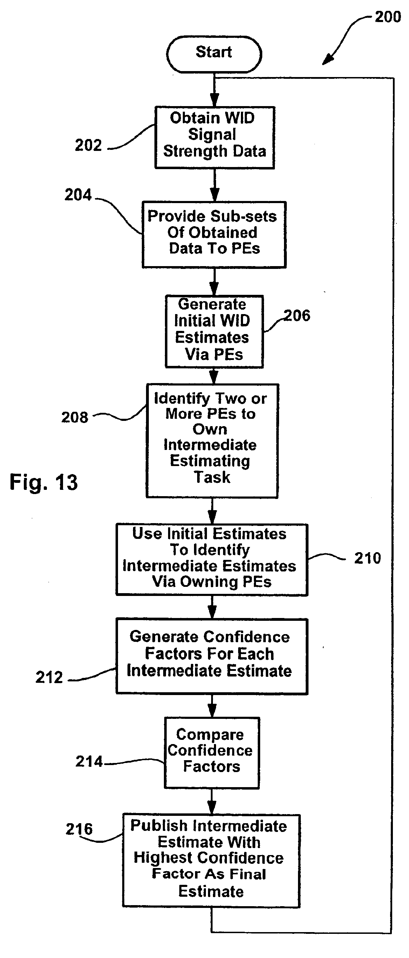

Consistent with the above, Fig. 13 illustrates one process 200 for generating intermediate position estimates and confidence factors and then generating a final estimate as a function thereof. Referring also to Figs. 1 and 3, at block 202, access points 16 are used to obtain WID signal strength data. At block 204, the obtained data is provided to the positioning engines PE1 through PE12. Next, at block 206, each positioning engine PE1 through PE12 generates an initial WID position estimate. At block 208, the engines identify two or more of the engines to own the intermediate estimating task. Here, for instance, when a WID 30 is located as indicated in Fig. 3, in at least some embodiments, the first and second engines corresponding to regions R1 and R2 may be designated as owning the intermediate estimating task. In another embodiment, where the WID 30 is located as indicated in Fig. 3, each of the engines corresponding to regions R1, R2, R5 and R6 may be designated as an owning intermediate estimating engine.

Referring still to Fig. 13, at block 210, each of the intermediate estimating engines identified at block 208 identifies an intermediate estimate. At block 212, each of the intermediate estimating engines also generates a confidence factor indicating the likelihood that the associated intermediate estimate is accurate. At block 214, one of the intermediate estimating engines compares the confidence factors and, block 216, the comparing estimate published the intermediate estimate with the highest confidence factor as the final estimate. After block 216, control passes again back up to block 202 where the loop illustrated is repeated.

It has also been recognized that, in cases where several algorithms may be performed by engines to estimate position in different sub-spaces of a larger facility space, while a system employee may manually determine which algorithms work best in which sub-spaces, a system may be programmed to automatically adapt to environment during a commissioning procedure and thereby program itself to a great extent to select an optimal positioning process as a function of general WID location.

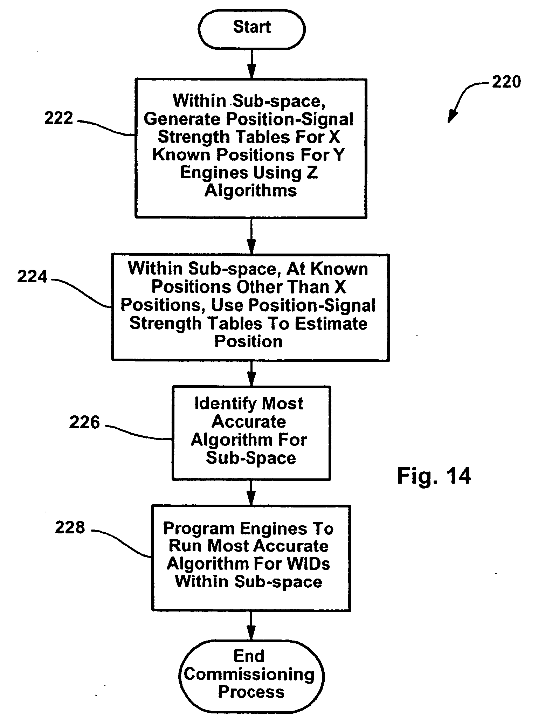

To this end, referring also to Fig. 14, a semi-automated commissioning procedure 220 is illustrated wherein the positioning engines are used during a commissioning procedure to, in effect, self-select algorithms to be used during normal system operation to identify WID position. In this regard, referring also to Figs. 1 and 3, at block 222, for each subspace within a facility space 13, a system user uses a WID 30 to generate position signal strength tables for a plurality (e.g., X where X may be 10 or 20 positions) of known positions for each of the system positioning engines using a plurality (e.g., Z where Z may be 5 or 10) different position estimating algorithms. Thus, for instance, in Fig. 3, each of regions R1 through R12 may be a separate subspace within facility space 13. Here, where there are twelve positioning engines and twelve separate subspaces or regions R1 through R12, 144 different position-signal strength tables would be generated wherein each table includes data corresponding each of the X known positions within the associated subspace.

Next, at block 224, the system user causes the system to estimate WID positions within each one of the subspaces or regions R1 through R12 at other known positions. Here, the phrase "other known positions" is used to refer to positions within the subspace other than the X known positions for which the associated position-signal strength tables were generated at block 222. Thus, for instance, if the tables for subspace R1 in Fig. 3 were generated using twenty initial and known positions within subspace R1, at block 224 the user may cause the engines to estimate WID position at ten additional known positions within subspace R1 where the additional positions are different than the known positions. Continuing, at block 226, each of the engines PE1 through PE12 identifies the most accurate algorithm for each specific subspace. Thus, for instance, first positioning engine PE1 may identify a first algorithm to be performed when a WID 30 is located within region R1, a second position estimating algorithm to be performed when the WID is located within region R5, a third position estimating algorithm to be performed when the WID is located within region R8, and so on. Similarly, each of the other positioning engines PE2 through PE12 would identify most accurate algorithms for each of the subspaces R1 through R12 for that particular engine.

Referring still to Figs. 1, 3 and 14, at block 228, the engines PE1 through PE12 are programmed to run the most accurate algorithms for those particular engines when a WID is located in each one of the different regions R1 through R12. After block 228 the commissioning procedure ends and normal system operation can begin.

In some embodiments a single engine or several engines may be programmed so that the estimate generated by one of the engines running a specific algorithm is always selected when an associated confidence factor is above a threshold value and so that some other algorithm is only performed if the confidence factor associated with the specific algorithm is below the threshold value. To this end, one method 270 of this type is illustrated in Fig. 12. At block 272, WID position is estimated using a first or current position determining algorithm. At block 274 a confidence factor for the estimate is generated. At decision block 276 one of the engines compares the confidence factor to the threshold value. Where the confidence factor is above the threshold value the estimate is published or otherwise rendered accessible. Where the confidence factor does not meet the threshold requirement control passes to block 278 where a different positioning algorithm is substituted as the current algorithm after which control passes back to block 272. At block 272 the substituted algorithm is used to estimate position. The process continues to loop until an acceptable confidence factor results.

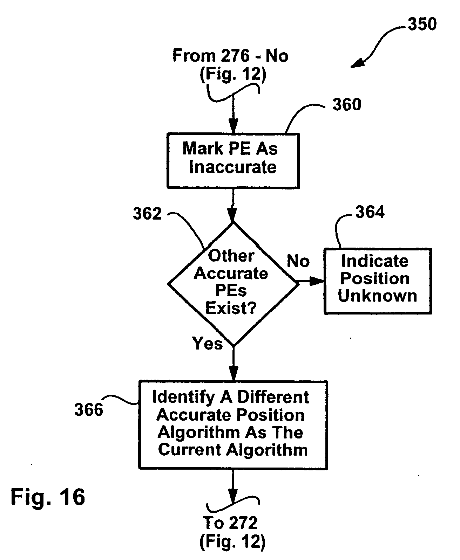

In at least some embodiments, it is contemplated that, under certain circumstances, none of the positioning engines or position algorithms will yield a sufficiency accurate position estimate for a WID and, in this case, it is contemplated that, the engines may perform some other functions such as indicating that WID positions are unknown. To this end, referring to Fig. 16, one subprocess 350 that may be substituted for block 280 in Fig. 12 is illustrated. Referring also to Fig. 12, at block 276, when the most recently generated confidence factor corresponding to a specific current position algorithm does not exceed a threshold confidence factor requirement, control passes to block 360 in Fig. 16. At block 360 the current position algorithm or, where each position engine runs a single position algorithm, the current position engine is marked as inaccurate. Next at decision block 362, the position engine determines whether other position algorithms that have not already been attempted and marked inaccurate exist. Where at least one other position algorithm exists that has not been marked inaccurate, control passes to block 366 where the positioning engines identify a different one of the algorithms that has not been attempted as the current algorithm. Thereafter, control passes back up to block 272 in Fig. 12 where the loop described above is repeated.

Referring once aging to block 362, where all of the position algorithms have been attempted but all of the associated confidence factors were less than the threshold requirement factor, control passes to block 364. At block 364, in at least some embodiments of the invention, the positioning engines indicate that the WID position is unknown. In other cases, one of the engines may publish the position estimate corresponding to the algorithms associated with the highest confidence factor along with some indication that the estimate is at least suspect given the low confidence factor value. Other possible functions at block 364 are contemplated.

While the invention may be susceptible to various modifications and alternative forms, specific embodiments have been shown by way of example in the drawings and have been described in detail herein. However, it should be understood that the invention is not intended to be limited to the particular forms disclosed. For example, while the engine regions R1-R12 in Fig. 3 have similar sizes, it should be appreciated that systems are contemplated where engine regions may be of variable sizes. In addition, some systems may include at least some regions that completely or substantially include other smaller regions and may also include regions that are identical. Where regions are identical it is contemplated that associated positioning engines would both generate position estimates which would then be combined or, in some cases, one of the estimates would be selected to provide a final estimate. In addition, in at least some cases the access point subsets associated with two or more engines will be identical or will be interleaved with each other.

Moreover, in some cases where confidence factors are generated for position estimates, one or more of the engines may be programmed to perform a low confidence function when none of the confidence factors is above some minimal level. For example, in some cases the low confidence function may include suggesting via the WID or some other suitable device (e.g., human-machine interface) in communication with network 34 that a learning process should be performed.

Furthermore, while some of the examples above include central positions for each region for generating distance values, it should be appreciated that any point or position within a region may be selected as a spatial point of reference for determining distance values. Thus, for instance, in at least some cases a region location for region R1 may include the upper right hand corner of space 13 as illustrated in Fig. 3 as opposed to central point RC1.

In addition, it should be appreciated that while the invention is described above in the context of an automated manufacturing facility, the invention may be used in other environments such as open outdoor spaces or in campus or city type setting where some space is confined while other spaces are essentially open and unobstructed.

Thus, the invention is to cover all modifications, equivalents, and alternatives falling within the spirit and scope of the invention as defined by the following appended claims.

To apprise the public of the scope of this invention, the following claims are made:

In summary, an apparatus for use with a portable wireless information device (WID) and a plurality of receivers spaced apart within a facility having a space is disclosed, the receivers and WID cooperating to generate position information indicative of the distances of signal paths between the receivers and the WID, the apparatus comprising at least a first processor linked to the receivers for receiving signal strength information therefrom, the at least a first processor running at least first and second position estimating programs on signal strength information associated with first and second sub-sets of the receivers, respectively, for identifying first and second position estimates of the WID within the space, respectively.

## Claims

1. A system for use with a portable wireless information device (WID) within a space, the WID including a transmitter for transmitting wireless WID signals, the system comprising:
a plurality of communication units spaced apart within the space, each unit cooperating with the WID to generate position information, the position information useable to generate a WID position estimate, the plurality of units including at least first and second sub-sets, each unit including at least one of a wireless receiver and a wireless transmitter;
at least a first receiver; and
at least a first processor linked to the at least a first receiver for receiving position information therefrom, the at least a first processor running at least first and second position estimating programs on position information associated with the first and second sub-sets, respectively, for identifying at least first and second WID position estimates within the space, respectively.

2. The system of claim 1 wherein each communication unit includes at least a wireless receiver.

3. The system of claim 2 wherein the facility area includes at least first and second regions associated with the first and second receiver sub-sets, the first region including at least a portion of the second region and the second region including at least some area outside the first region.

4. The system of claim 1 wherein the at least a first processor, after identifying the at least first and second estimates, compares the estimates and selects one of the position estimates as the WID position.

5. The system of claim 4 wherein the process is repeated such that when a WID is moved within the space, the selected one of the position estimates may change.

6. The system of claim 5 wherein the first and second receiver sub-sets are associated with first and second regions of the space, the first and second regions including first and second region locations, respectively, and, wherein, the processor selects one of the position estimates by comparing the position estimates to the region locations of the first and second regions and selecting the position estimate at least in part as a function of the position estimate that is closest to one of the first and second region locations.

7. The system of claim 6 wherein the region locations are central points of the regions.

8. The system of claim 4 wherein the at least a first processor generates a confidence factor for each of the first and second estimates indicating a likelihood that the estimates are accurate and wherein the processor selects by comparing the confidence factors and selecting the position estimate with an associated highest confidence factor.

9. The system of claim 8 wherein the first and second sub-sets are associated with first and second regions of the space, respectively, and, wherein, the confidence factors are based at least in part on at least one of relative positions of the first and second estimates, the locations of the estimates relative to the first and second areas, recent WID position estimates, eradicity of the position information and signal to noise ratio.

10. The system of claim 1 wherein the at least a first processor, after identifying the at least first and second estimates, mathematically combines the estimates to generate a final WID position estimate.

11. The system of claim 10 wherein the at least a first processor generates a confidence factor for each of the at least first and second estimates indicating a likelihood that the estimates are accurate and wherein the processor mathematically combines as a function of the confidence factors.

12. The system of claim 1 wherein first and second regions of the space are associated with the at least first and second receiver sub-sets and each of the first and second regions includes the same portion of the space.

13. The system of claim 1 wherein the at least a first processor also identifies a confidence factor for each of the estimates and, wherein, when none of the confidence factors exceeds a minimum required confidence factor, the processor performs a low confidence function.

14. The system of claim 1 wherein at least the first position estimating program includes different estimating algorithms as a function of the general location of the WID.

15. An apparatus for use with a portable wireless information device (WID) and a plurality of receivers spaced apart within a facility having a space, the receivers and WID cooperating to generate position information indicative of the distances of signal paths between the receivers and the WID, the apparatus comprising:
at least a first processor linked to the receivers for receiving signal strength information therefrom, the at least a first processor running at least first and second position estimating programs on signal strength information associated with first and second sub-sets of the receivers, respectively, for identifying first and second position estimates of the WID within the space, respectively.

16. The apparatus of claim 15 wherein the at least a first processor, after identifying the first and second estimates, selects one of the position estimates as a final WID position estimate.

17. The apparatus of claim 16 wherein the at least a first processor generates a confidence factor for each of the first and second estimates indicating a likelihood that the estimates are accurate and wherein the processor selects by comparing the confidence factors and selecting the position estimate with an associated highest confidence factor.

18. The apparatus of claim 15 wherein the space also includes N-2 additional regions, each region at least in part overlapping at least one other region, the receivers including N-2 additional sub-sets, each of the additional sub-sets associated with a different one of the additional regions, the at least a first processor running an additional N-2 position estimating programs on signal strength information associated with the additional sub-sets for identifying N-2 additional position estimates for the WID within the space.

19. The apparatus of claim 18 wherein the at least a first processor, after identifying N position estimates, selects one of the position estimates as a final position estimate.

20. The apparatus of claim 15 further including at least a second processor and wherein the first processor runs the first position estimating program and the second processor runs the second position estimating program.

21. A method for use with a portable wireless information device (WID) within a space, the WID including a transmitter for transmitting wireless WID signals, the method comprising the steps of:
obtaining position information indicative of the distances of signal paths between the WID and specific locations within the space;
using a first sub-set of the position information to identify a first estimate of WID location;
using a second sub-set of the position information to identify a second estimate of WID position; and
using the first and second estimates to identifying a final estimate of the WID location.

22. The method of claim 21 wherein the step of using the first and second estimates includes generating a confidence factor for each of the estimates where the confidence factors are indicative of the accuracy of the estimates.

23. The method of claim 22 wherein the step of using the first and second estimates further includes identifying the estimate having the highest confidence factor as the final estimate.

24. The method of claim 22 wherein the step of using the first and second estimates further includes mathematically combining the first and second estimates to provide a final estimate of WID location as a function of the confidence factors.

25. The method of claim 21 wherein first and second facility regions are associated with the first and second position information sub-sets and wherein the first and second regions overlap.

26. The method of claim 21 further including the step of using N-2 additional sub-sets of the position information to identify N-2 additional estimates of WID position wherein the step of using the first and second estimates to identify a final estimate of the WID position includes using a sub-set of the first through Nth estimates to identify a final estimate of the WID location.

27. The method of claim 21 wherein the step of using a first sub-set includes running a first program to estimate WID position and the step of using a second sub-set includes running a second program to estimate WID position.

28. The method of claim 27 wherein the first and second programs are different.

29. A method for use with a portable wireless information device (WID) within a space, the WID including a transmitter for transmitting wireless WID signals, the method for tracking the position of the WID within the space and comprising the steps of:
obtaining position information indicative of the distances of signal paths between the WID and specific locations within the space;
attempting to use a first sub-set of the position information to identify a first estimate of WID location;
attempting to use a second sub-set of the position information to identify a second estimate of the WID location;
when one of the first and second estimates is identified, rendering the one of the first and second estimates accessible by applications requiring WID location; and
when the one of the first and second estimates is not identified and the other of the first and second estimates is identified, rendering the other of the first and second estimates accessible by applications requiring WID location.

30. The method of claim 29 further including the step of, when both the first and second estimates are identified, identifying a confidence factor for each of the first and second estimates where the confidence factors are indicative of the accuracy of the estimates and identifying the estimate associated with the greatest confidence factor as a final estimate to be rendered accessible.

31. A method for estimating the position of a wireless information device (WID) within a space, the method comprising the steps of:
a) estimating WID position via a first estimating program;
b) identifying a confidence factor for the WID position estimate;
c) when the confidence factor meets a threshold requirement, rendering the position estimate accessible to other applications; and
d) when the confidence factor fails to meet a threshold requirement, repeating steps (a) through (c) with a second estimating program.

32. The method of claim 31 wherein step (d) is performed for each of a plurality of estimating programs until one of WID position has been estimated at least once via each of the estimating programs and an estimate that meets the threshold requirement has been identified.

33. The method of claim 32 wherein, after WID position has been estimated via each of the estimating programs, when none of the estimates meets the threshold requirement, the method includes the step of performing another function.

34. A method for use with a portable wireless information device (WID) within a space, the WID including a transmitter for transmitting wireless WID signals, the method for tracking the position of the WID within the space and comprising the steps of:
obtaining position information indicative of the distances of signal paths between the WID and specific locations within the space;
attempting to use a first sub-set of the position information to identify a first estimate of WID location;
attempting to use a second sub-set of the position information to identify a second estimate of the WID location;
determining if at least one of the estimates is sufficiently accurate;
when at least one of the estimates is sufficiently accurate, rendering the likely most accurate of the estimates accessible as the final estimate; and
when none of the estimates is sufficiently accurate, performing another function.

35. The method of claim 34 wherein the step of performing another function includes indicating that the WID position is unknown.

36. The method of claim 34 wherein the step of determining if at least one of the estimates is sufficiently accurate includes generating a confidence factor for each of the estimates and comparing the confidence factor to a threshold factor and, when a confidence factor is greater than the threshold factor, determining that the associated estimate is sufficiently accurate.
